# EUROPEAN PATENT APPLICATION

(11) **EP 1 247 695 A2**
(43) Date of publication of application: **09.10.2002**
(21) Application number: 02252416.9
(22) Date of filing: 03.04.2002
(51) Int. Cl.: B60R 11/02

(54) **Hands-free cellular phone device for vehicles**

(30) Priority: 04.04.2001 KR 2001009435 U
(71) Applicant: Vehicle System Co., Ltd., Seoul (KR)
(72) Inventor: Choi, Kyeong Soo, Kwanak-gu, Seoul (KR)
(74) Representative: Davies, Gregory Mark

(57) **Abstract**

Disclosed herein is a hands-free cellular phone device (100) for vehicles. The device consists of a casing (10) provided with a speaker (1), a mike (2), several control buttons including a call button (3), and jacks (4). In addition, the device has a structure capable of transceiving sound through the speaker and the mike in a call mode without holding a cellular phone (P) with a user's hand when a power source and the cellular phone are connected to the associated jacks. In this case, a mounting hole (11) is formed on the casing (10) such that the casing is locked to a hand grip fitting hole (H) by a bolt (5). The bolt passes through the mounting hole and is tightened into the hand grip fitting hole. The hand grip fitting hole is formed on the inside wall of a vehicle body above a side window adjacent to a driver's seat. The present invention is directed to provide a hands-free cellular phone device for vehicles, which is designed to prevent the vehicle body from being damaged and to allow the mike and the speaker of the device to be positioned near to the driver, thus improving speech quality.

## Description

### BACKGROUND OF THE INVENTION

### Field of the Invention

The present invention relates generally to a hands-free cellular phone device for vehicles mounted to the interior of the vehicle body, and more particularly, to a hands-free cellular phone device for vehicles, which is designed to have a mounting hole on a casing of the device such that the casing is locked to a hand grip fitting hole formed on the inside wall of the vehicle body above a side window adjacent to a driver's seat, and which is designed to adjust the position of the device depending on a variable sitting position of the driver, thus preventing the vehicle body from being damaged when mounting the device on the vehicle body, and thus allowing a mike and speaker of a device to be near to the driver, therefore improving speech quality.

### Description of the Prior Art

As well known to those skilled in the art, a hands-free cellular phone device has a casing provided with a speaker and a mike, several control buttons including a call button, and jacks. In addition, the device has a structure capable of transceiving sound through the speaker and the mike in a call mode without holding a cellular phone with a user's hand when a power source and the cellular phone are connected to the associated jacks. Further, the device is mounted to the interior of a vehicle body, and serves to prevent an unexpected accident due to the use of the cellular phone while driving a vehicle.

Generally, the hands-free cellular phone device is seated in a cradle which is mounted to a dashboard of a vehicle. The cradle is firmly attached to the dashboard by bolts or adhesive tapes having strong adhesive strength. Recently, there has been proposed a hands-free cellular phone device integrated with a rearview mirror. In this case, the device is installed in a rearview mirror mounting frame such that the rearview mirror serves as the cellular phone mounting device in addition to its original function.

However, the conventional hands-free cellular phone device has a problem that it may damage the vehicle body, because the dashboard must be bored or a strong adhesive must be used in the case of mounting the cradle to the dashboard, and besides, it may have poor appearance due to the marks left by the cradle when removing the cradle from the dashboard.

Meanwhile, in the case of the hands-free cellular phone device integrated with the rearview mirror, the device does not damage the vehicle body. But, since a driver is too distant from the device, noise generated from the inside and outside of the vehicle as well as howling, defined as a reverberating sound of the inside of the vehicle, may interfere with a call. Thus, the conventional device has a problem that it cannot ensure excellent speech quality.

Meanwhile, a hand grip fitting hole is formed on the inside wall of the vehicle body above the side mirror adjacent to a driver's seat, and sealed by a plug. Usually, a hand grip is fitted into the hand grip fitting hole formed on the inside wall adjacent to a passenger's seat, whereas the hand grip is not fitted into the hand grip fitting hole adjacent to the driver's seat while leaving the hole empty. The reason why the hand grip fitting hole remains empty is that the driver's side may be changed according to individual national regulations.

### SUMMARY OF THE INVENTION

Accordingly, the present invention has been made keeping in mind the above problems occurring in the prior art, and an object of the present invention is to provide a hands-free cellular phone device for vehicles, which is designed to have a mounting hole on a casing of the device such that the casing is locked to a hand grip fitting hole formed on the inside wall of the vehicle body above a side window adjacent to a driver's seat, thus preventing a vehicle body from being damaged when mounting the hands-free cellular phone device to the vehicle body, and thus allowing the device to be positioned close to the ear and the mouth of a driver, therefore ensuring excellent speech quality.

Another object of the present invention is to provide a hands-free cellular phone device, which is designed to allow the position of the device to be adjusted depending on a variable sitting position of the driver, and to allow a mike of the device to approach the mouth of the driver, therefore ensuring excellent speech quality.

In order to accomplish the above object, the present invention provides a hands-free cellular phone device for vehicles, comprising a casing provided with a speaker, a mike, several control buttons including a call button, and jacks, and having a structure capable of transceiving sound through the speaker and the mike in a call mode without holding a cellular phone with a user's hand when a power source and the cellular phone are connected to the associated jacks, wherein a mounting hole is formed on the casing such that the casing is locked to a hand grip fitting hole by a bolt, the bolt passing through the mounting hole and being tightened into the hand grip fitting hole, the hand grip fitting hole formed on an inside wall of a vehicle body above a side window adjacent to a driver's seat, whereby the mike and the speaker can be positioned near to the driver, thus allowing speech quality to be good.

Further, in accordance with this invention, the mounting hole is formed as a longitudinal hole so as to adjust a position of the device depending on a variable position of the driver.

According to this invention, the mike is installed at an end of a mike extension rod which downwardly extends from the casing and is held, in a waiting mode, by a mike holder provided on the upper end of the casing.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is an exploded perspective view showing the assembly of a hands-free cellular phone device for vehicles according to this invention;
Fig. 2 is a view showing the device of this invention, in which both a cellular phone and a power source are connected to jacks of the device for calling;
Fig. 3 is a view showing the operation of a mike holder included in the device of this invention; and
Fig. 4 is a view showing a mike included in the device of this invention, in which a solid line shows the mike held by the mike holder and a dot-and-dash line shows the mike removed from the mike holder.

### DESCRIPTION OF THE PREFERRED EMBODIMENTS

Reference now should be made to the drawings, in which the same reference numerals are used throughout the different drawings to designate the same or similar components.

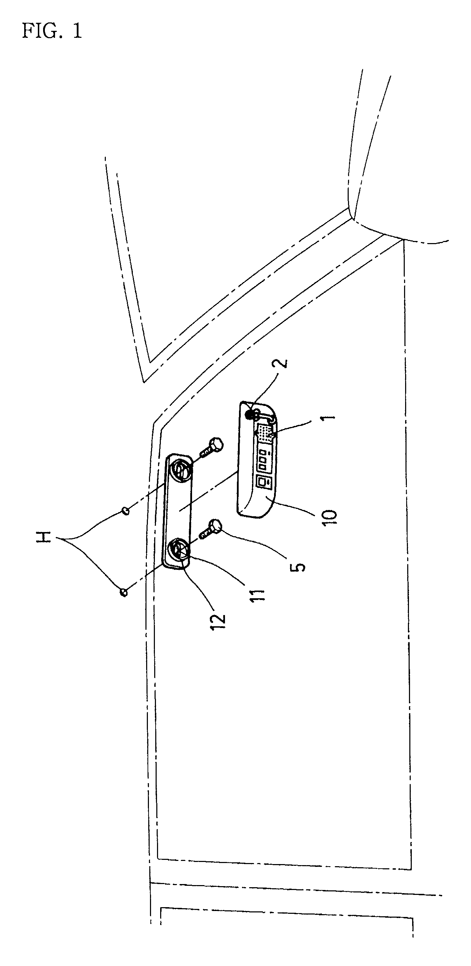

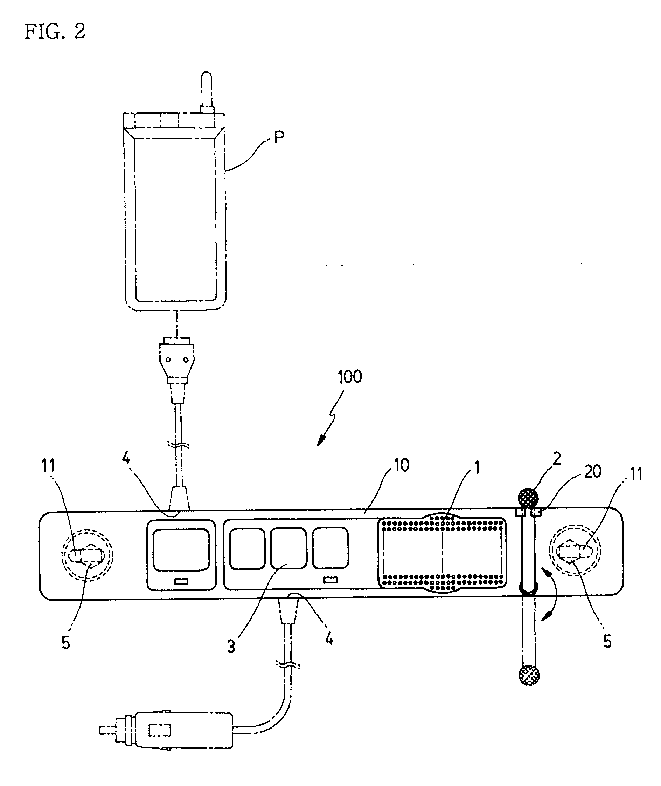

Fig. 1 is an exploded perspective view showing the assembly of a hands-free cellular phone device for vehicles according to this invention. Fig. 2 is a view showing the device of this invention, in which both a cellular phone and a power source are connected to jacks of the device for calling.

According to this invention, the device 100 includes a casing 10 which is provided with a speaker 1 and a mike 2. On the casing 10 are installed several control buttons including a call button 3, and jacks 4. When a power supply and a cellular phone P are connected to the associated jacks 4, a user can transceive sound through the speaker 1 and the mike 2 in a call mode without holding the cellular phone P with his hand.

Further, a mounting hole 11 is formed on the casing 10 such that the casing 10 is locked to a hand grip fitting hole H by a bolt 5. The bolt 5 passes through the mounting hole 11 and is tightened into the hand grip fitting hole H. In this case, the hand grip fitting hole H is formed on the inside wall of a vehicle body above a side window adjacent to a driver's seat.

The mounting hole 11 may be formed on the center of the rear surface of the casing 10. Alternatively, the mounting hole 11 may be formed on the side of the casing 10. The accompanying drawings show the latter case.

The distance from the driver to a steering wheel can be adjusted depending on his physical proportions and driving habits. The nearer the device 100 is positioned to the driver, the better the speech quality is. Thus, it is required to change the position of the device 100 depending on the position of the driver. Preferably, the mounting hole 11 may be a longitudinal hole. After loosening the locking bolt 5, the device 100 is horizontally moved with respect to the mounting hole 11 by a desired distance. Thereafter, the locking bolt 5 is tightened again.

Preferably, the mike 2 is installed on an end of a mike extension rod which is designed to downwardly extend from the casing 10 so as to approach a driver. That is, the mike 2 is positioned near to the mouth of the driver, thus allowing the voice of the driver to be clearly transmitted to a calling party even when there is noise generated from the vehicle.

The O-ring shaped mike holder 20 is formed on a side of the casing 10. Since the driver may be distracted by the shaking of the mike 2 while driving a vehicle, it is desirable that the mike holder 20 hold the mike extension rod in a waiting mode. Thus, the mike holder 20 may be formed anywhere on the casing 10. The accompanying drawings show the case of where the mike holder 20 is provided on the upper portion of the casing 10.

Preferably, the mike holder 20 has a pair of arms 21 which are selectively opened according to an electric switching operation of a switch provided on the casing 10.

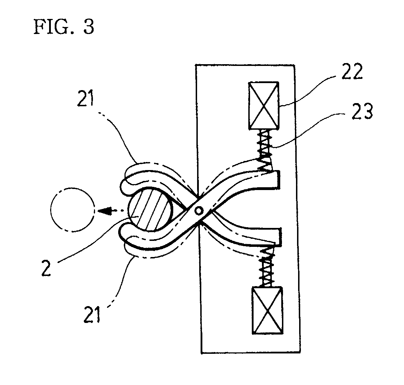

Fig. 3 is a view showing the operation of the mike holder 20, as an example. Assuming that the call button 3 is set to the operating mode, the operation of the mike holder 20 will be described. First, when the driver pushes the switch, that is, the call button 3, for transceiving sound with the device 100, a magnetic force is momentarily generated by opposing magnets 22. In this case, parts of the arms 21 set in the casing 10 are pulled by the magnets 22 in opposite directions, whereas parts of the arms 21 outside of the casing 10 are opened. At this time, the mike 2 is removed from the mike holder 20 so as to be directed downward. Thus, the mike 2 approaches the mouth of the driver, thus allowing the voice of the driver to be clearly transmitted to a calling party.

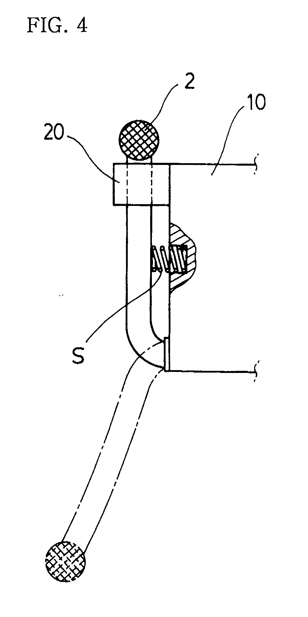

As soon as the magnetism of the magnets 22 is removed, the arms 21 of the mike holder 20 are returned, by a spring 23, to their original state. Thus, when finishing a call, the driver has only to insert the mike extension rod into the mike holder 20. Fig. 4 shows the mike 2, in which a solid line shows the mike 2 held by the mike holder 20 and a dot-and-dash line shows the mike 2 removed from the mike holder 20. In addition, as shown in Fig. 4, a spring S may be installed in the casing 10 to promote the removal of the mike 2 from the mike holder 20.

The above-mentioned embodiment is described for the operation of the mike holder 20 using the magnets 22. But, the present invention is not limited to the construction using the magnets 22.

As described above, the present invention provides a hands-free cellular phone device for vehicles, which is designed to have a mounting hole on a casing of the device such that the casing is locked to a hand grip fitting hole formed on the inside wall of the vehicle body above a side window adjacent to a driver's seat, and which is designed to adjust the position of the device depending on a variable sitting position of the driver, thus preventing the vehicle body from being damaged when mounting the device on the vehicle body, and thus allowing a mike and speaker of a device to be near to the driver, therefore improving speech quality. Furthermore, the present invention provides a hands-free cellular phone device for vehicles, which is designed such that a mike extension rod provided with the mike extends downwardly from the casing in a call mode, thus maximizing speech quality.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A hands-free cellular phone device for vehicles, comprising a casing provided with a speaker, a mike, several control buttons including a call button, and jacks, and having a structure capable of transceiving sound through the speaker and the mike in a call mode without holding a cellular phone with a user's hand when a power source and the cellular phone are connected to the associated jacks, wherein a mounting hole is formed on the casing such that the casing is locked to a hand grip fitting hole by a bolt, said bolt passing through the mounting hole and being tightened into the hand grip fitting hole, said hand grip fitting hole formed on an inside wall of a vehicle body above a side window adjacent to a driver's seat, whereby the mike and the speaker can be positioned near to the driver, thus allowing speech quality to be good.

2. The device according to claim 1, wherein said mounting hole is formed as a longitudinal hole so as to adjust a position of the device depending on a variable driver's position.

3. The device according to claim 1, wherein said mike is installed at an end of a mike extension rod, said mike extension rod downwardly extending from the casing in such a way as to allow the mike to approach the mouth of a driver.

4. The device according to claim 3, wherein said casing is provided with a mike holder thereon for holding the mike extension rod.

5. The device according to claim 4, wherein said mike holder has a pair of arms, said arms designed to be selectively opened according to an electric switching operation of a switch provided on the casing.

6. The device according to claim 5, wherein said switch is a call button.
